# EUROPEAN PATENT SPECIFICATION

(11) **EP 0 905 555 B1**
(45) Date of publication and mention of the grant of the patent: **18.09.2002**
(21) Application number: 98202061.2
(22) Date of filing: 01.07.1996
(51) Int. Cl.: G03B 21/56, G03B 21/62

(54) **Rear projection screen**
Rückprojektions-Bildschirm
Ecran de rétroprojection

(30) Priority: 03.07.1995 JP 16722095
(43) Date of publication of application: 31.03.1999
(62) Divisional of application: 96304832.7
(73) Proprietor: MATSUSHITA ELECTRIC INDUSTRIAL CO., LTD., Kadoma-shi, Osaka 571-0050 (JP)
(72) Inventor: Aoki, Satoshi, Kadoma-shi, Osaka 571 (JP); Mitani, Katsuaki, Ibaraki-shi,Osaka 567 (JP)
(74) Representative: Crawford, Andrew Birkby

(56) References cited:
- EP-A- 0 706 077
- US-A- 4 921 330
- PATENT ABSTRACTS OF JAPAN vol. 017, no. 703 (P-1666), 22 December 1993 -& JP 05 241110 A (SONY CORP), 21 September 1993

## Description

### II. BACKGROUND OF THE INVENTION

### Field of the Invention

The present invention relates to a light transmission type screen device for use in projection type television receivers and the like for magnification and projection of images by means of lenses.

### Description of the Prior Art

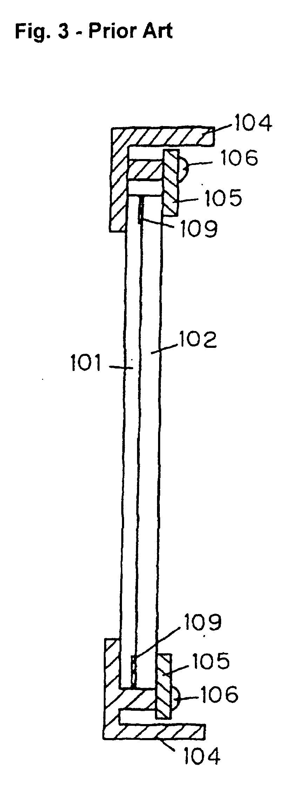

As shown in Fig. 3, a prior art screen device has a structure wherein a screen comprising a lenticular lens sheet 101 and a Fresnel lens sheet 102 is fixed by means of mounting arrangements.

More specifically, the lenticular lens sheet 101 and Fresnel lens sheet 102 are put together by use of adhesive tapes 109 and the resulting assembly is fixed onto a framework 104 by means of mounting hardware 105, screws 106 and the like. However, this method of mounting causes the lenticular lens sheet 101 that has a large degree of extension and shrinkage by temperature changes or a large expansion coefficient to become wavy when the lenticular lens sheet 101 and Fresnel lens sheet 102 are pressed on the framework 104 too strongly, and gaps are created between the lenticular lens sheet 101 and the Fresnel lens sheet 102. In other words, what is called an air gap phenomenon occurs, thereby causing inconsistencies in colon

In order to solve the foregoing problems, new structures have been proposed in the Japanese Published Unexamined Patent Application Nos. JP-03-108236, JP-04-70645 and JP-04-85886. These new structures will be explained in the following:

Fig. 4 shows the structure as disclosed in the foregoing Published Unexamined Patent Application No. JP-03-108236. One side of a screen 201 is fixed onto a framework 202 and the opposing side of the screen 201 is applied with a pulling force through jigs 203 in accordance with temperature changes so that creation of air gaps is prevented by pulling the screen 201 constantly.

Fig. 5 shows the structure as disclosed in the foregoing Published Unexamined Patent Application No. JP-04-85886.

Here, instead of the jigs as used in the foregoing to apply a pulling force to the screen, rollers 303 are provided on the side of a screen 301 opposing to one side where the screen 301 is fixed onto a framework 302 by means of mounting hardware 304. When the screen 301 is expanded or shrunk by temperature changes, the rollers 303 rotate according to the expansion or shrinkage of the screen 301 and hold the screen 301 firmly, thereby fixing the screen 301 securely onto the framework 302 and at the same time absorbing the expansion and shrinkage of the screen 302 caused by temperature changes.

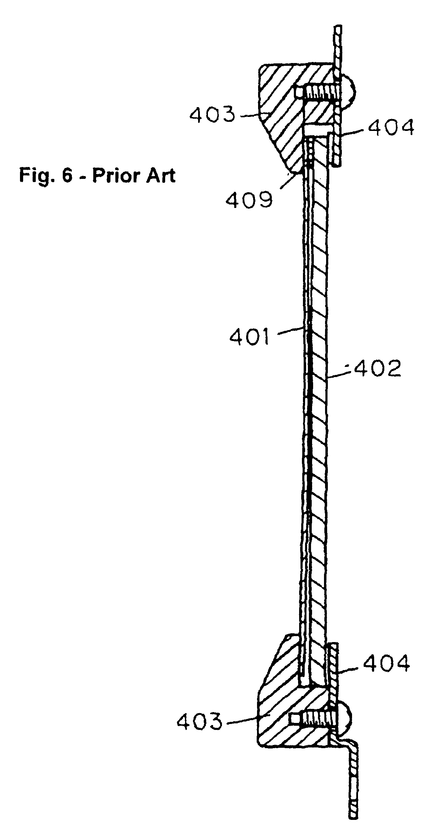

Fig. 6 shows the structure as disclosed in the foregoing Published Unexamined Patent Application No. JP-04-70645, wherein the upper part of a lenticular lens sheet 401 and a Fresnel lens sheet 402, both being put together there by means of a double-sided adhesive tape, is fixed onto a framework 403 by means of mounting hardware 404 and the lower part thereof is held by squeezing between the framework 403 and the mounting hardware 404, thus bringing the lenticular lens sheet 401 into a close contact with the Fresnel lens sheet 402 due to its own weight when the expansion or shrinkage of the screen occurs by temperature changes.

However, all these structures tend to be rather complicated since jigs to provide a pulling force to the screen and rollers to absorb the expansion or shrinkage of the screen are required, and also tend to be bulky in order to accommodate the jigs and rollers, thus presenting problems.

Furthermore, the structure according to the foregoing Published Unexamined Patent Application No. JP-04-70645 relies on the ability of the lenticular lens sheet 401 to return to its original shape when it is expanding again after the lenticular lens sheet 401 has once shrunk by a temperature change. However, when spacings between lenticular lenses of the lenticular lens sheet 401 are very small, the lenticular lens sheet 401 looks like a plain sheet of film and is very light in weight, thereby causing the recovery to the original shape by its own weight to become uncertain and leading to a problem of air gap formation.

### III. SUMMARY OF THE INVENTION

The present invention provides a screen device comprising:
a screen comprising a lenticular lens sheet;
a Fresnel lens sheet; and
a light transmissive panel having a main surface;
wherein said Fresnel lens sheet and said light transmissive panel are mounted such that a specified clearance is provided therebetween, and said lenticular lens sheet is disposed between said Fresnel lens sheet and said light transmissive panel and is not fixed to either said light transmissive panel or said Fresnel lens sheet,
wherein said light transmissive panel further has side portions extending from edges of said main surface and substantially perpendicular thereto and said Fresnel lens is fixed to said side portions such that said clearance is greater than the thickness of said lenticular sheet.

The present invention thus provides a screen device of a compact structure, whereby images with no inconsistencies in color are realized by preventing a lenticular lens sheet from becoming wavy due to temperature changes and keeping the lenticular lens sheet and Fresnel lens sheet securely in contact with each other.

### IV. BRIEF DESCRIPTION OF THE DRAWINGS

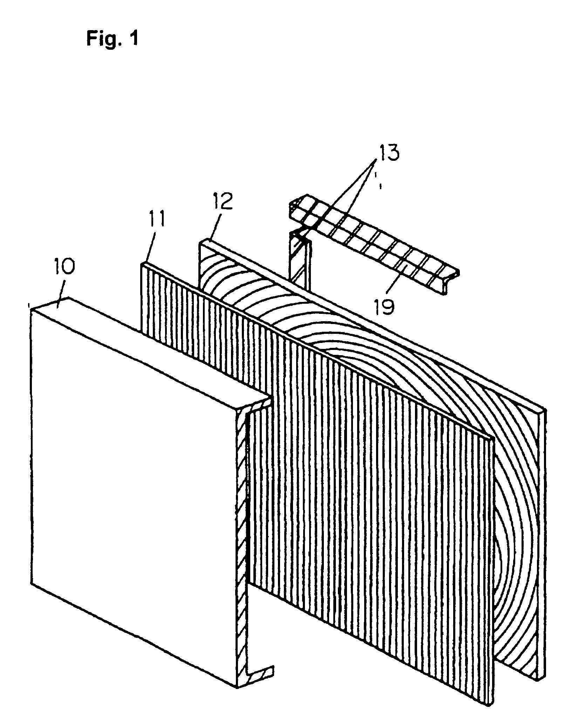

Fig. 1 an exploded perspective view of a screen device as an exemplary embodiment of the present invention.

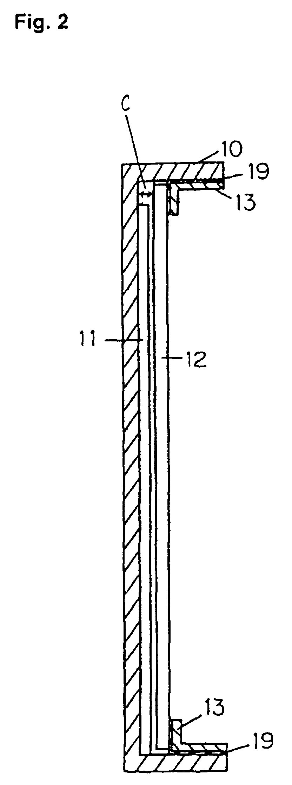

Fig. 2 is a cross-sectional view of the screen device of Fig. 1 after assembly.

Fig. 3 is a cross-sectional view of a prior art screen device.

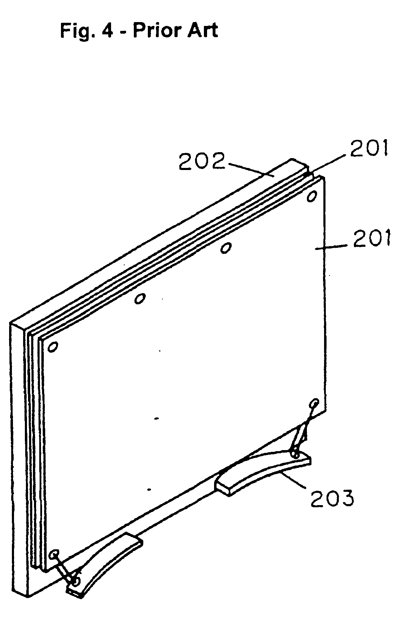

Fig. 4 is a perspective view of a prior art screen device.

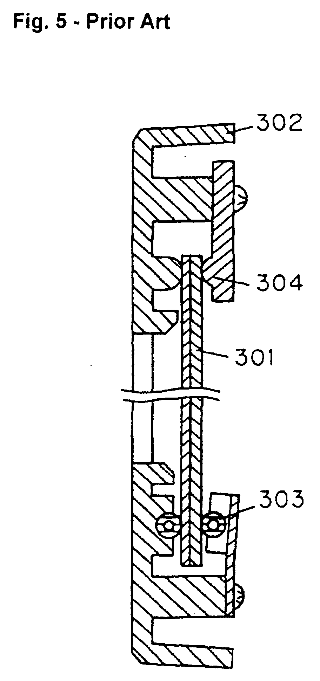

Fig. 5 is a cross-sectional view of a prior art screen device.

Fig. 6 is a cross-sectional view of a prior art screen device.

### V. DETAILED DESCRIPTION OF THE INVENTION

Next, an exemplary embodiment of the present invention of a screen device will be explained with the help of drawings.

Fig. 1 is an exploded perspective view of a screen device as an exemplary embodiment of the present invention, and

Fig. 2 is a cross-sectional view of Fig. 1 after assembly.

As shown in Fig. 2, the screen device of the present invention comprises: a light transmissive panel 10 housing a screen composed of a lenticular lens sheet 11 and a Fresnel lens sheet 12; and screen mounting hardware 13 that is used to fix the foregoing Fresnel lens sheet 12 onto the foregoing light transmissive panel 10 by means of a double-sided adhesive tape 19 or the like, for example.

In the above structure, it is made possible for the lenticular lens sheet 11 to expand or shrink freely even when the ambient temperature changes by creating a clearance C, which is a little bit larger than the thickness T of the lenticular lens sheet 11, between the light transmissive panel 10 and the Fresnel lens sheet 12, and there will be no gaps created between the lenticular lens sheet 11 and the Fresnel lens sheet 12 due to partial deformations of the lenticular lens sheet 11. Furthermore, there will be no danger of the lenticular lens sheet 11 getting disengaged since it is sandwiched between the light transmissive panel 10 and the Fresnel lens sheet 12.

Thus, according to the screen device of the present invention in spite of its compactness, it has become possible to obtain images that are free of inconsistencies in color by keeping the lenticular lens sheet and Fresnel lens sheet always in close contact with each other to prevent waving of the lenticular lens sheet caused by temperature changes.

## Claims

1. A screen device comprising:
a screen comprising a lenticular lens sheet (11);
a Fresnel lens sheet (12); and
a light transmissive panel (10) having a main surface;
wherein said Fresnel lens sheet and said light transmissive panel are mounted such that a specified clearance (c) is provided therebetween, and said lenticular lens sheet is disposed between said Fresnel lens sheet and said light transmissive panel and is not fixed to either said light transmissive panel or said Fresnel lens sheet,
**characterised in that** said light transmissive panel further has side portions extending from edges of said main surface and substantially perpendicular thereto and said Fresnel lens is fixed to said side portions such that said clearance is greater than the thickness of said lenticular sheet.

2. The screen device of claim 1, wherein the light incident side of said Fresnel lens sheet is fixed to said side portions of said light transmissive panel.

3. The screen device of claim 2, wherein the light incident side of said Fresnel lens sheet is fixed to said side portions by using double-sided adhesive tape.

4. The screen device of claim 2, wherein the light incident side of said Fresnel lens sheet is fixed to said side portions by using screen mounting hardware fixed with double-sided adhesive tape.

## Patentansprüche

1. Schirmvorrichtung, umfassend:
einen Schirm, der eine lentikulare Linsenplatte (11) umfasst;
eine Fresnel-Linsenplatte (12); und
eine lichtdurchlässige Frontplatte (10), die eine Hauptfläche aufweist;
wobei die Fresnel-Linsenplatte und die lichtdurchlässige Frontplatte solcherart montiert sind, dass ein vorbestimmter Zwischenraum (C) zwischen ihnen vorgesehen ist, und wobei die lentikulare Linsenplatte zwischen der Fresnel-Linsenplatte und der lichtdurchlässigen Frontplatte angeordnet ist und weder an der lichtdurchlässigen Frontplatte noch der Fresnel-Linsenplatte befestigt ist,
**dadurch gekennzeichnet, dass** die lichtdurchlässige Frontplatte außerdem Seitenbereiche aufweist, die sich von Kanten der Hauptfläche erstrecken und im wesentlichen senkrecht dazu sind, und dass die Fresnel-Linse an den Seitenbereichen solcherart befestigt ist, dass der Zwischenraum größer als die Dicke der lentikularen Platte ist.

2. Schirmvorrichtung nach Anspruch 1, wobei die Lichteinfallseite der Fresnel-Linsenplatte an den Seitenbereichen der lichtdurchlässigen Frontplatte befestigt ist.

3. Schirmvorrichtung nach Anspruch 2, wobei die Lichteinfallseite der Fresnel-Linsenplatte an den Seitenbereichen unter Verwendung von doppelseitigem Klebeband befestigt ist.

4. Schirmvorrichtung nach Anspruch 2, wobei die Licnteinfallseite der Fresnel-Linsenplatte an den Seitenbereichen unter Verwendung einer Schirmmontagebaugruppe befestigt ist, die mit dem doppelseitigen Klebeband befestigt ist.

## Revendications

1. Dispositif à écran comprenant :
un écran comprenant une feuille formant lentille lenticulaire (11);
une feuille formant lentille de Fresnel (12); et
un panneau (10) transmettant la lumière, comportant une surface principale;
dans lequel ladite feuille formant lentille de Fresnel et ledit panneau transmettant la lumière sont montés de telle sorte qu'un jeu spécifié (6) est présent entre eux, et ladite feuille formant lentille lenticulaire est disposée entre ladite feuille formant lentille de Fresnel et ledit panneau transmettant la lumière et n'est fixé ni audit panneau transmettant la lumière ni à ladite feuille formant lentille de Fresnel,
**caractérisé en ce que** ledit panneau transmettant la lumière comporte en outre des parties latérales qui s'étendent à partir de bords de ladite surface principale en étant essentiellement perpendiculaire à cette surface et que ladite lentille de Fresnel est fixée auxdites parties latérales de telle sorte que ledit jeu est supérieur à l'épaisseur de ladite feuille lenticulaire.

2. Dispositif à écran selon la revendication 1, dans lequel ledit côté d'incidence de la lumière de ladite feuille formant lentille de Fresnel est fixé auxdites parties latérales dudit panneau transmettant la lumière.

3. Dispositif à écran selon la revendication 2, dans lequel le côté d'incidence de la lumière de ladite feuille formant lentille de Fresnel est fixé auxdites parties latérales moyennant l'utilisation d'un ruban adhésif double face.

4. Dispositif à écran selon la revendication 2, dans lequel le côté d'incidence de la lumière de ladite feuille formant lentille de Fresnel est fixé auxdites parties latérales moyennant l'utilisation d'un matériel de montage de l'écran fixé au moyen du ruban adhésif double face.
